# EUROPÄISCHE PATENTSCHRIFT

(11) **EP 3 332 887 B1**
(45) Veröffentlichungstag und Bekanntmachung des Hinweises auf die Patenterteilung: **16.10.2019**
(21) Anmeldenummer: 17202027.3
(22) Anmeldetag: 16.11.2017
(51) Int. Cl.: B21L 3/02, B21L 7/00

(54) **KETTENSCHWEISSMASCHINE ZUM WIDERSTANDSSTUMPFSCHWEISSEN VON KETTENGLIEDERN**
CHAIN WELDING MACHINE FOR RESISTANCE WELDING STUMP OF CHAIN LINKS
MACHINE DE SOUDAGE DE CHAÎNES PERMETTANT LE SOUDAGE BOUT À BOUT PAR RÉSISTANCE DES MAILLONS DE CHAÎNE

(30) Priorität: 08.12.2016 DE 102016224494
(43) Veröffentlichungstag der Anmeldung: 13.06.2018
(73) Patentinhaber: WAFIOS Aktiengesellschaft, 72764 Reutlingen (DE)
(72) Erfinder: RAUSCHER, Jürgen, 72805 Lichtenstein (DE); STEFAN, Florian, 72525 Münsingen (DE); HAHN, Philipp, 72198 Rottenburg (DE)
(74) Vertreter: Patentanwälte Ruff, Wilhelm, Beier, Dauster & Partner mbB

(56) Entgegenhaltungen:
- CH-A- 458 028
- DD-A1- 249 650
- DD-A5- 278 969

## Beschreibung

### ANWENDUNGSGEBIET UND STAND DER TECHNIK

Die Erfindung betrifft eine Kettenschweißmaschine zum Widerstandsstumpfschweißen von Kettengliedern gemäß dem Oberbegriff von Anspruch 1.

Ketten mit Kettengliedern, welche aus Drahtelementen gebogen werden, werden heutzutage in großem Umfang mit Hilfe spezieller automatisierter Werkzeugmaschinen hergestellt. Bei der Herstellung werden Kettenglieder aus zunächst geraden Drahtstücken geeigneter Länge gebogen. Die fertig gebogenen, an einer Stelle aber noch offenen Kettenglieder werden dann mit anderen Kettengliedern zu einem Kettenstrang verbunden. Anschließend werden die fertig gebogenen, noch offenen Kettenglieder eines Kettenstrangs durch ein geeignetes Widerstandsstumpfschweißverfahren zu geschlossenen Kettengliedern verschweißt. Dabei wird eine stoffschlüssige Verbindung der freien Enden eines gebogenen Kettengliedes erzeugt. Mit Hilfe spezieller Kettenschweißmaschinen kann das Widerstandsstumpfschweißverfahren automatisiert werden.

Zu den bei der Kettenherstellung genutzten Widerstandsstumpfschweißverfahren gehören das Abbrennstumpfschweißen und das Pressstumpfschweißen. Die Offenbarung dieser Anmeldung betrifft letztgenannte Technologie, also die Widerstands-Pressstumpfschweißtechnologie.

Der Schweißprozess der Widerstandsstumpfschweißtechnologie wird nach DIN 1910-100 als Schweißen unter Anwendung von Kraft ohne Schweißzusatz bezeichnet. Die zum Schweißen erforderliche Wärme wird durch Stromfluss über den elektrischen Widerstand des Schweißstoßes erzeugt. Bei der konduktiven Stromübertragung entsteht die Wärme unmittelbar an den Stoßstellen der Werkstückenden. Bei diesem Schweißprozess muss eine ausreichend große äußere Kraft aufgewendet werden, um an beiden Stoßflächen eine mehr oder weniger starke plastische Verformung während der Erwärmungsphase zu bewirken. Durch die Erwärmung und das anschließende Zusammendrücken der Stoßflächen wird eine stoffschlüssige Verbindung der beiden Drahtenden erreicht.

Eine gattungsgemäße Kettenschweißmaschine zum Widerstandsstumpfschweißen von Kettengliedern ist für den Prozess des Pressstumpfschweißens ausgelegt. Die Kettenschweißmaschine umfasst ein Maschinengestell, eine Steuerwelle zur zeitlichen Steuerung von kinematischen Funktionen der Kettenschweißmaschine, eine Kettentransporteinrichtung zum Zuführen von nicht verschweißten Kettengliedern zu einer Schweißposition und zum Abführen geschweißter Kettenglieder von der Schweißposition nach einer Schweißoperation, eine Elektrodenanordnung mit mindestens einem Paar von auf die zu verschweißenden Kettengliedenden zustellbaren Elektroden zum Zuführen von Schweißstrom, zwei beweglich gelagerte Stauchstahlhalter, die an gegenüberliegenden Seiten der Schweißposition angeordnet sind und an einander zugewandten Seiten Stauchstähle zum Übertragen einer Stauchkraft und eines Stauchwegs auf das Kettenglied tragen sowie ein auf die Stauchstahlhalter wirkendes Stauchsystem zur Bereitstellung der Stauchkraft sowie des Stauchweges gemäß einem vorgebbaren Stauchablauf.

Die Schweizer Patentschrift CH 458 028 beschreibt eine Steuerung von Stauchhebeln an einer elektrischen Kettenschweißmaschine für C-förmige Kettenglieder. Ausgegangen wird von einem Stand der Technik, bei dem die Stauchhebel elektrischer Widerstands-Stumpf-Kettenschweißmaschinen mechanisch, nämlich von der Hauptwelle aus über Kurvenscheiben und Hebelkonstruktionen sowie unter der Wirkung von Schraubenfedern betätigt wurden. Die Versuche zur Nutzung hydraulischer Steuerungen werden als nicht immer zufriedenstellend beschrieben. Verbesserungen werden erwartet, wenn es gelingt, eine gedrängte Anlage zu schaffen, die möglichst einfach ist und deren Organe wiederum von der Hauptwelle gesteuert werden können, wobei die Anordnung so getroffen werden muss, dass möglichst wenig bewegte Steuerelemente Verwendung finden. Die vorgeschlagene Steuerung ist gekennzeichnet durch einen auf die Stauchstähle bzw. ihre Hebel einwirkenden, doppelt beaufschlagten Zylinder, dessen Räume über einen Steuerschieber mit einer Pumpe und über einen Niederdruckschieber mit einem Niederdruckventil so schaltbar sind, dass der Zylinder entweder in die Ruhestellung geschoben oder durch Umkehr sowie durch Zuschalten des Niederdruckventils mit Anlagedruck oder schließlich durch Abschalten des Niederdruckventils unter der Wirkung eines ständig wirksamen Hochdruckventils mit Stauchdruck beaufschlagt wird.

Die Patentschrift DD 249 650 A1, die als nächstliegender Stand der Technik angesehen wird, beschreibt eine Antriebsvorrichtung für die Stauchwerkzeuge einer elektrisch-mechanisch arbeitenden Stumpfschweißmaschine zum Verschweißen C-förmig vorgebogener Kettenglieder. Dabei wird ein Stauchhebel direkt von einem umsteuerbaren Hydraulikzylinder angetrieben, während der andere Stauchhebel des Kraftübertragungssystems der Kettenschweißmaschinen am Maschinengehäuse befestigt ist und das bis dahin übliche federbelastete Kniegelenk, welches den Kraftverlauf vom Hub der Stauchwerkzeuge abhängig macht, nicht verwendet wird. Dadurch soll mit einem geringen konstruktiven und steuerungstechnischen Aufwand erreicht werden, auf einer ansonsten mechanisch arbeitenden Kettenschweißmaschine ein frei wählbares und vom Hub der Stauchstähle unabhängiges Kraftprogramm zu realisieren, welches über die Stauchwerkzeuge auf das zu schweißende Kettenglied einwirkt.

Viele bekannte Kettenschweißmaschinen auch älterer Bauart sind robust und arbeiten zufriedenstellend bei der Herstellung großer Serien von Ketten. Die Umrüstung auf andere Prozesse, z.B. beim Wechsel der Materialien der Kettenglieder oder beim Wechsel auf andere Geometrien, ist jedoch aufwendig.

### AUFGABE UND LÖSUNG

Es ist eine Aufgabe der Erfindung, eine Kettenschweißmaschine bereitzustellen, die bei unterschiedlichen Widerstandsstumpfschweiß-Prozessen mit hoher Prozesssicherheit arbeitet und sich durch hohe Produktivität sowie energieeffiziente Schweißung auszeichnet.

Zur Lösung dieser Aufgabe stellt die Erfindung eine Kettenschweißmaschine mit den Merkmalen von Anspruch 1 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Eine Kettenschweißmaschine gemäß der beanspruchten Erfindung zeichnet sich dadurch aus, dass das Stauchsystem als frei programmierbares Stauchsystem zur Programmierung eines von der Steuerwelle unabhängigen Stauchablaufprofils mit definierbarem Zusammenhang zwischen Stauchweg und Zeitablauf ausgelegt ist. Das Stauchsystem ist somit von der Steuerwelle entkoppelt.

Bei der Steuerwelle handelt es sich vorzugsweise um eine mechanische Steuerwelle (Hauptwelle), die in dem Maschinengestell gelagert ist und zur zeitlichen Steuerung von kinematischen Funktionen der Kettenschweißmaschine über Kurvenscheiben dient. Solche mechanischen Steuerwellen sind bei vielen herkömmlichen Kettenschweißmaschinen vorhanden. Mechanische Steuerwellen können unter anderem aus Kostengründen vorteilhaft sein, weil manche Bewegungen funktioneller Komponenten in ihren Abläufen nicht variabel zu sein brauchen. Beispielsweise kann für das Heben und Senken von Elektroden immer der gleiche Weg zur gleichen Zeit vorgesehen sein und ist somit prädestiniert für einen Antrieb über Kurvenscheiben auf einer Steuerwelle. Eine mechanische Steuerwelle muss aber nicht zwingend vorgesehen sein. Es ist auch möglich, die Kettenschweißmaschine ohne mechanische Steuerwelle zu bauen und Funktionen einer mechanischen Steuerwelle durch eine "virtuelle Steuerwelle" auszulösen. Dieser Begriff beschreibt hier ein Zusammenspiel aus einer computerbasierten Steuerung und davon gesteuerter Aktoren, z.B. Hydraulikkomponenten und/oder Pneumatikkomponenten und/oder elektromechanischen Komponenten. Es ist somit möglich, Signale zur zeitlichen Steuerung von kinematischen Funktionen der Kettenschweißmaschine über eine "virtuelle Steuerwelle" zu steuern. Eine mechanische Steuerwelle kann ggf. entfallen. Sofern keine mechanische, sondern eine virtuelle Steuerwelle vorhanden ist, soll das Stauchsystem von dieser unabhängig frei programmierbar sein.

Um einige der Vorteile einer erfindungsgemäßen Kettenschweißmaschine zu erkennen, erscheint es zweckmäßig, zunächst einen für die Kettenschweißmaschine typischen Prozessablauf genauer zu betrachten.

Zu Beginn eines Zyklus transportiert eine Kettentransporteinrichtung die Kette mit ineinander gehängten, aber noch nicht verschweißten Kettengliedern auf einer schräg verlaufenden Kettenzuführungsschiene um ein Kettenglied weiter. Dadurch gelangt ein noch nicht geschweißtes Kettenglied in eine Schweißposition, z.B. in eine Aussparung auf einem (ggf. höhenverstellbaren) Amboss unterhalb von Elektroden. Ggf. richtet ein Kettendreher die Kette so auf, dass der Schweißspalt (Spalt zwischen der zu verschweißenden Drahtenden) nach oben zeigt.

Um den Weitertransport der Kette zu ermöglichen, befinden sich die Stauchstähle zu Beginn des Zyklus in einer relativ weit von der Schweißposition zurückgezogen Position, damit vor und hinter der Schweißposition am Amboss genügend Freiraum zur Weiterbewegung der Kette entsteht. (Die Rückzugsbewegung in eine zurückgezogene Position kann als letzter Schritt eines vorhergehenden Zyklus angesehen werden.)

Dann wird das Kettenglied an den Kettengliedbögen von den Stauchstählen erfasst und eine Anlegekraft aufgebaut. Die hierfür genutzte Bewegung der Stauchschlitten von einer zurückgezogenen Position, die während des Kettentransports eingenommen wird, bis zum Aufbau der Anlegekraft, wird in dieser Anmeldung auch als Vorhub bezeichnet.

Aufgrund der Tatsache, dass ein gebogener Stahlwerkstoff ein Rückfederungsvermögen besitzt und seine durch den Umformprozess aufgebauten inneren Spannungen wieder abbauen möchte, entsteht aus dem vorgeschalteten Kettenbiegeprozess ein Spalt zwischen den Stoßflächen. Weitere Einflüsse können u.a. Schwankungen in der Einzugslänge und/oder Unterschiede im Bruchverhalten beim Trennen des Drahts (Material der noch ungebogenen Kettenglieder) sein. Es ergibt sich daraus ein unregelmäßiger Teilungsfehler, welcher bei jedem Kettenglied leicht verändert vorliegen kann. Dieser Fehler sollte ausgeglichen werden, weil er zu unterschiedlichen Anlegekräften bei Schweißbeginn führen kann. Zu diesem Zweck wird nach dem Anlegen der Stauchstähle an den Kettengliedbögen ein sogenannter Teilungsausgleich ausgeführt, der mit einer mehr oder weniger großen Verlagerung der Stauchstähle einhergeht. Der Teilungsausgleich soll vor jeder Schweißung eine konstante Kontaktkraft an den Stoßflächen erzeugen. Zeitlich koordiniert mit dem Teilungsausgleich fahren die Elektroden herunter und kontaktieren die zu verschweißenden Kettengliedschenkel form- und kraftschlüssig.

Wenn die Kontaktkraft aufgebracht ist, erfolgt der eigentliche Widerstands-Pressstumpfschweißvorgang. Dazu wird mittels der Elektroden Schweißstrom in die Kettengliedendabschnitte eingeleitet. Durch Widerstandserwärmung kommt es am Schweißspalt zur Erwärmung. Die Werkstückenden können dabei in manchen Fällen Temperaturen bis zu ca. 1100 - 1300°C erreichen. Die Stauchstähle führen den Stauchprozess weggesteuert durch. Dabei werden die beiden erwärmten Werkstückenden zusammengestaucht.

Am Ende des Stauchwegs kommt es zu einem Endstauchen, welches das Kettenglied auf die gewünschte Teilung (lichte Weite des Kettenglieds zwischen den Kettengliedbögen) bringt und den Bindungsmechanismus auslöst. Zeitlich koordiniert damit wird der Schweißstrom abgeschaltet.

Nach dem Endstauchen öffnen sich die Elektroden wieder und fahren in die Ausgangsstellung zurück. Typischerweise erfolgt am noch eingespannten, heißen Kettenglied eine Entgratoperation, bevor zu Beginn des nächsten Zyklus das fertig geschweißte Kettenglied mittels der Kettentransporteinrichtung weitertransportiert und gleichzeitig das nächste Kettenglied in die Schweißposition gefördert wird. Um diesen Weitertransport zu ermöglichen, fahren die Stauchwerkzeuge vorher in ihre zurückgezogene Position zurück.

Das Stauchsystem ist als frei programmierbares Stauchsystem ausgelegt, an welchem ein von der Steuerwelle unabhängiges Stauchablaufprofil mit definierbarem Zusammenhang zwischen Stauchweg und Zeitablauf vorprogrammiert werden kann. Es handelt sich um eine Weg/Zeit-Programmierung, nicht um eine Programmierung der Stauchkraft. Mit Hilfe des Stauchsystems kann der bei manchen bisherigen Maschinen durch die Stauchkurvengestalt starr vorgegebene Stauchablauf für jede Kettenabmessung und jeden Kettenwerkstoff individuell variabel programmiert werden. Durch die Programmierung des Stauchablaufs können unter anderem die Erwärmungsphase sowie die Endstauchphase produktabhängig, geometrieabhängig und werkstoffabhängig sowie kundenindividuell reproduzierbar definiert werden. Dadurch hat der Endkunde die Möglichkeit, sein Know-how und seine Erfahrung ohne mechanisches Umrüsten der Maschine unmittelbar in die Abläufe beim Pressstumpfschweißen einfließen zu lassen.

Dies gilt für jede Phase des Stauchablaufs. Beispielsweise können die Bewegungen beim Vorhub sowohl vor Beginn des eigentlichen Stauchens bis zum Anlegen der Stauchstähle als auch nach Abschluss eines Stauchprozesses beim Zurückziehen der Stauchstähle sehr schnell erfolgen, wodurch die Gesamt-Prozesszeit kurz gehalten werden kann. Der Stauchablauf, welcher elementar wichtig für die Rekristallisation über die Stoßstelle hinweg ist, kann variabel programmiert werden, um einen möglichst optimalen Stauchablauf im Verhältnis zum erwärmten Materialvolumen schnell und flexibel realisieren zu können, ohne mechanische Aufwände betreiben zu müssen. Dies ist möglich, da das Stauchsystem von der Steuerwelle mechanisch entkoppelt ist. Mechanische Stauchkurvenscheiben können entfallen. Für die Änderung des Stauchablaufs ist dann auch kein Austausch von Stauchkurvenscheiben mit unterschiedlichen Stauchprofilen mehr erforderlich. Stattdessen kann durch die Weg-Zeit-Programmierung ein Stauchprofil realisiert werden, bei der die Position der Stauchstähle zu jedem Zeitpunkt präzise vorgebbar ist.

Als vorteilhaft werden Weiterbildungen angesehen, bei denen das Stauchsystem so konfiguriert ist, dass während eines gesamten Stauchablaufs eine Messung der Stauchkraft erfolgt und der Stauchablauf zusätzlich in Abhängigkeit von der der gemessenen Stauchkraft gesteuert wird. Dies kann beispielsweise so erfolgen, dass eine Hüllkurve definiert wird, welche den Bereich zulässiger Stauchkräfte für jede Phase des Stauchprozesses definiert. Entsprechende Hüllkurven-Datensätze können in einem Speicher der Steuereinheit gespeichert sein. Die Steuerung kann so programmiert sein, dass bei einer zu großen Abweichung der Stauchkraft von einer Soll-Stauchkraft, also beim Verlassen der Hüllkurve (durch Überschreiten einer oberen Grenzkurve oder Unterschreiten einer unteren Grenzkurve), eine Fehlermeldung bzw. ein Fehlersignal ausgegeben wird. Nach Empfang eines Fehlersignals kann z.B. der Stauchablauf sofort oder nach Beenden eines Zyklus angehalten werden. Dies ist aufgrund der Entkopplung des Stauchsystems von der Steuerwelle auch bei kontinuierlich drehender Steuerwelle jederzeit möglich. Bleibt die gemessene Stauchkraft dagegen innerhalb der Grenzen der Hüllkurve, verläuft der Stauchablauf unabhängig von eventuellen kleinen Stauchkraftschwankungen. Es ist somit eine permanente Stauchkraftüberwachung realisierbar, die nur bei kritischen Kraftspitzen eingreift.

Es sind auch andere Steuerungsvarianten möglich. Beispielsweise kann der Sekundärstrom (Schweißstrom) des Schweißtransformators ebenso als Parameter für die Regelung des Stauchablaufs genutzt werden, ähnlich der Stauchkraft. Durch das Messen des Sekundärstromes kann eine Aussage über den aktuell herrschenden elektrischen Widerstand im Sekundärkreis, im Kettenglied und im Schweißstoß aufgrund der Erwärmung der Bauteile durch den elektrischen Strom und durch den Schweißprozess getroffen werden. Aufgrund des dann ermittelten Verlaufes des elektrischen Widerstandes (dynamischer Widerstandsverlauf) kann durch einen verzögerten oder aber auch beschleunigten Stauchablauf (mehr oder weniger Weg pro Zeit im Stauchsystem) gefahren werden. Somit kann der für das Pressstumpfschweißen charakteristische "teigige Schweißstoß" durch einen größeren Stauchweg kälter (Widerstand sinkt) oder aber auch durch einen kleineren Stauchweg wärmer (Widerstand steigt) gemacht werden. Der dynamische Widerstandsverlauf kann durch Messung des Sekundärstroms ermittelt werden und in Abhängigkeit dieses Verlaufs kann der Stauchablauf gesteuert werden. Diese Steuerung ist im Gegensatz zur Steuerung über die Stauchkraft eine reine elektrische Erfassung des Steuerparameters (Sekundärstrom) und ist somit unabhängig von jeglichen mechanischen Reibungsverlusten.

Eine Steuerung nach Kraft und eine Steuerung nach Schweißstrom können auch kombiniert werden.

Vorzugsweise ist das Stauchsystem weiterhin so konfiguriert, dass eine Synchronisation zwischen einem Zündwinkel eines sekundärseitigen Wechselstroms (d.h. des Schweißstroms) eines Schweißtransformators und dem Stauchablauf realisiert werden kann. Durch die Stauchkraftüberwachung und die Synchronisation zwischen dem Zündwinkel des sekundärseitigen Schweißstroms und dem Stauchablauf erfährt jede Schweißung den optimalen Zeitpunkt für den Start des Schweißstroms. Dadurch kann auch eine reproduzierbare Anfangskraftbedingung für jede Schweißung sichergestellt werden.

Es ist somit möglich, eine definierte, in Abhängigkeit des Drahtquerschnitts einstellbare Anfangskraft aufzubringen und zu überwachen. Durch die Stauchkraftüberwachung und den netzsynchronen Start des Stauchablaufs kann erreicht werden, dass zu Beginn jeder Schweißung die gleichen Anfangsbedingungen herrschen. Hierdurch können für jedes Kettenglied gleichmäßig bzw. konstant optimale Schweißbedingungen sichergestellt werden, so dass auch die Qualität der Verschweißungen innerhalb der Kettenglieder einer Kette gleichmäßig hoch sein kann.

Bei vorteilhaften Weiterbildungen ist das Stauchsystem als servotechnisch gesteuertes Stauchsystem mit mindestens einem Servoantrieb ausgelegt. Der Begriff "Servoantrieb" bezeichnet im Rahmen dieser Anmeldung einen Antrieb mit elektronischer Lage-, Geschwindigkeits- und/oder Momentenregelung oder einer Kombination derselben. Dies ermöglicht den Aufbau eines frei programmierbaren Stauchsystems mit besonders präzise vorgebbarem Stauchablaufprofil.

Obwohl es möglich ist, einen oder mehrere elektromechanische Servoantriebe zu verwenden, hat es sich als vorteilhaft herausgestellt, wenn als Servoantrieb ein servohydraulischer Antrieb verwendet wird. Ein servohydraulischer Antrieb bietet die Möglichkeit, bei Bedarf hohe Kräfte oder auch hohe Geschwindigkeiten in einem geschlossenen Regelkreis zur Verfügung zu stellen. So kann beispielsweise während der Vorhubphasen zeitsparend mit hohen Geschwindigkeiten (und geringer Kraft) gefahren werden, während für den eigentlichen Stauchprozess bei Bedarf hohe Kräfte mit präzise regelbaren Vorschubgeschwindigkeiten und Vorschubbeschleunigungen bereitgestellt werden können.

Obwohl es prinzipiell möglich ist, mit einem einzigen Servoantrieb für das Stauchsystem auszukommen, ist bei bevorzugten Ausführungsformen vorgesehen, dass das Stauchsystem für jeden der Stauchstahlhalter einen gesonderten Servoantrieb zur Erzeugung von Bewegungen des damit gekoppelten Stauchstahlhalters aufweist.

Bei manchen früheren Kettenschweißmaschinen der hier betrachteten Art sind Stauchstahlhalter an schwenkbeweglichen Stauchhebeln angebracht oder als solche ausgebildet. Bei bevorzugten Ausführungsformen der Kettenschweißmaschine sind dagegen die Stauchstahlhalter an linear entlang einer Stauchrichtung verfahrbaren Stauchschlitten angeordnet. Die Stauchbewegung ist dann eine koaxiale Bewegung der Stauchschlitten.

Die Stauchschlitten können über einen oder mehrere Hebel (Stauchhebel) mit einem zugeordneten Servoantrieb gekoppelt sein. Sofern es der Bauraum zulässt, wird es aber als vorteilhaft angesehen, wenn das Stauchsystem zwei autarke servohydraulische Linear-Achsen für den direkten Stauchantrieb der Stauchschlitten aufweist. Der Begriff "direkter Stauchantrieb" bedeutet hierbei, dass ein direkter Kraftfluss zwischen den servohydraulischen Antrieben und den damit bewegten Stauchstählen vorliegt, so dass kein Kraftverlust und/oder Genauigkeitsverlust durch mechanische Umlenkungen und daraus resultierenden Elastizitäten auftreten kann.

Für die Realisierung der Kraftüberwachung kann ein der aufgebrachten Kraft proportionales elektrisches Signal bei Bedarf an einem Servoantrieb abgegriffen werden. Eine besonders exakte Ermittlung der Stauchkraft ist bei manchen Ausführungsbeispielen dadurch möglich, dass ein von dem Servoantrieb gesonderter Kraftsensor zwischen dem Servoantrieb und dem zugeordneten Stauchstahlhalter, insbesondere dem Stauchschlitten, angeordnet ist.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1: zeigt eine schrägperspektivische Darstellung einer Kettenschweißmaschine zum Pressstumpfschweißen von Kettengliedern gemäß einer Ausführungsform;
- Fig. 2: zeigt eine Baugruppe mit hydraulisch-mechanischen Komponenten des Stauchsystems;
- Fig. 3: zeigt in 3A bis 3D die Konstellation von Komponenten im Bereich der Schweißposition in verschiedenen Phasen einer Stauchoperation;
- Fig. 4: illustriert schematisch die Kinematik eines Stauchzyklus in Form eines Weg-/Zeit-Diagramms;
- Fig. 5: zeigt in 5A, 5B und 5C verschiedene Ansichten einer mit Stauchschlitten ausgestatteten Baugruppe des Stauchsystems gemäß einer ersten alternativen Ausführungsform;
- Fig. 6: zeigt in 6A, 6B und 6C verschiedene Ansichten einer mit Stauchschlitten ausgestatteten Baugruppe des Stauchsystems gemäß einer zweiten alternativen Ausführungsform;
- Fig. 7: zeigt in 7A, 7B und 7C verschiedene Ansichten einer mit Stauchschlitten ausgestatteten Baugruppe des Stauchsystems gemäß einer dritten alternativen Ausführungsform;
- Fig. 8: zeigt in 8A, 8B und 8C verschiedene Ansichten einer mit Stauchschlitten ausgestatteten Baugruppe des Stauchsystems gemäß einer vierten alternativen Ausführungsform;

### DETAILLIERTE BESCHREIBUNG DER AUSFÜHRUNGSBEISPIELE

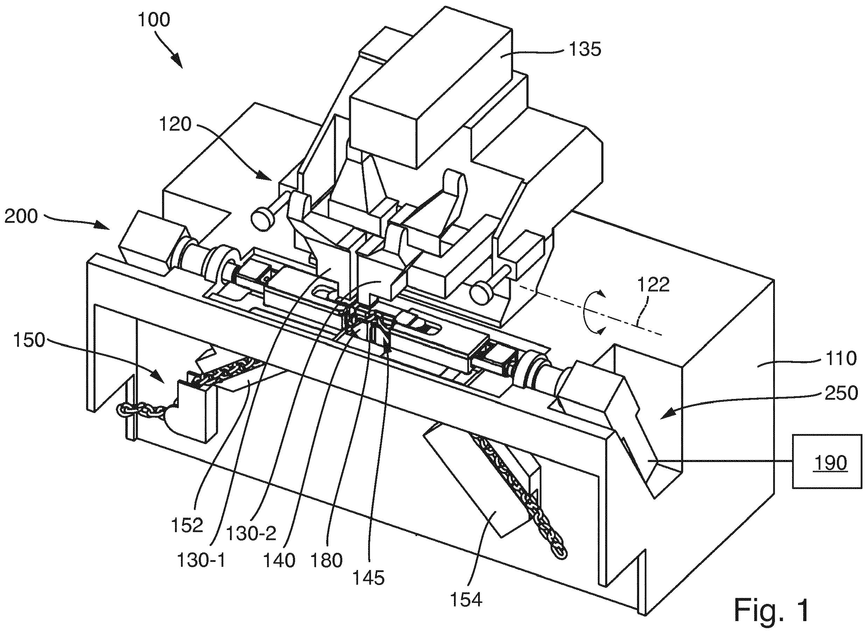

In Fig. 1 ist eine schrägperspektivische Darstellung einer Kettenschweißmaschine 100 zum Pressstumpfschweißen von Kettengliedern gemäß einer Ausführungsform schematisch dargestellt. Die Kettenschweißmaschine hat ein Maschinengestell 110, welches zum Teil aus miteinander verschweißten Stahlplatten besteht und eine äußerst verwindungssteife und tragfähige Konstruktion aufweist. Im Inneren des Maschinengestells ist eine von der Rückseite zugängliche Steuerwelle mit horizontaler Drehachse gelagert. Die mechanische Steuerwelle wird mittels eines Asynchron-Servomotors angetrieben, die Kraftübertragung zur Steuerwelle erfolgt über einen Riementrieb oder Kettenantrieb und ein Getriebe. Von der Steuerwelle ausgehend werden zahlreiche kinematische Funktionen, nicht jedoch der Stauchablauf, über Kurvenscheiben und Exzenter zeitlich gesteuert. Durch entsprechend gestaltete Hebel und Umlenkungen werden Weguntersetzungen und Kraftübersetzungen realisiert. Die für die einzelnen Funktionen benötigte Kraft wird mit Zylindern (z.B. hydraulisch oder pneumatisch) aufgebracht. Eine komplette Steuerwellenumdrehung entspricht einem Maschinenzyklus.

Auf der geschlossenen Oberseite des Maschinengestells befindet sich ein Schweißkopf 120, welcher als Ganzes um eine parallel zur Drehachse der Steuerwelle verlaufende Drehachse 122 verschwenkt werden kann. Der verschwenkbare Schweißkopf ist über eine Hebelanordnung mit einer zugeordneten Kurvenscheibe auf der Steuerwelle gekoppelt, so dass die Schwenkbewegung des Schweißkopfs von der Steuerwelle gesteuert wird. An der Vorderseite des Schweißkopfs sind vier Elektrodenhalter angebracht, die jeweils eine Elektrode 130-1, 130-2 etc. zum Einkoppeln von Schweißstrom in ein zu verschweißendes Kettenglied 180 tragen. Die Elektroden sind Bestandteile des Schweißkopfs, so dass die Anhebebewegungen und die Absenkbewegungen der Elektroden von der Steuerwelle gesteuert werden. Der Schweißstrom wird von einem am Maschinengestell fest montierten Schweißtransformator 135 bereitgestellt. Der Schweißstrom fließt von der Sekundärseite des Schweißtransformators über die beiden indirekt wassergekühlten Elektrodenpaare zu den zu verschweißenden Kettengliedern.

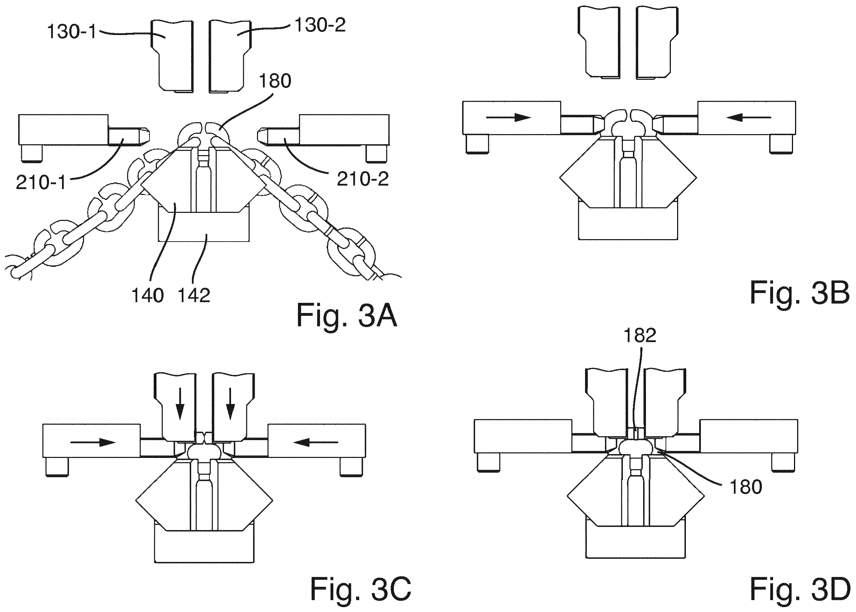

Unterhalb der Elektroden befindet sich die Schweißposition 145. Zur Aufnahme eines zu verschweißenden Kettenglieds 180 in der Schweißposition dient ein Amboss 140, welcher auf einem höhenverstellbaren Ambosslager 142 befestigt ist. Der Amboss hat an seiner Oberseite eine Aufnahmenut zur Aufnahme eines Kettenglieds 180 sowie beidseitig anschließend an die Aufnahmenut nach unten gerichtete Schrägflächen, auf denen diejenigen Kettenglieder aufliegen, die in der Kette vor bzw. hinter dem zu verschweißenden Kettenglied liegen und in dieses eingehängt sind (vgl. Fig. 3A). Der Amboss 140 hat die Aufgabe, eine reproduzierbare Ausgangslage für jedes Kettenglied vor dem Schweißprozess zu schaffen. Ebenso stützt der Amboss die beim Stauchen entstehende vertikal wirkende Kraftkomponente ab.

Eine Kettentransporteinrichtung 150 dient zum Zuführen von nicht verschweißten Kettengliedern zu der Schweißposition und zum Abführen geschweißter Kettenglieder von der Schweißposition nach einer Schweißoperation. Zu der Kettentransporteinrichtung gehört eine schräg von unten zum Amboss verlaufende Zuführschiene 152, auf der die bereits ineinander gehängten, aber noch nicht verschweißten Kettenglieder schrittweise Glied für Glied nach oben transportiert werden, und auf der gegenüberliegenden Seite eine schräg nach unten verlaufende Abfuhrschiene 154, auf der die miteinander verschweißten Kettenglieder, also ein fertiger Kettenabschnitt, nach schräg unten abgeführt werden. Der schrittweise Kettentransport wird vorzugsweise über einen gesonderten Servoantrieb, losgelöst von der Steuerwelle, realisiert.

Im Bereich zwischen der Zuführschiene und dem Amboss greift eine auf Höhe des Amboss montierte pneumatisch angetriebene Kettendreheinrichtung jeweils ein nach oben gefördertes Kettenglied an und dreht dieses um 45°, so dass der Schweißspalt (Spalt zwischen den aufeinander zuweisenden Drahtenden) nach oben in Richtung der Elektroden orientiert ist.

Zwei nicht dargestellte Entgrateinheiten (eine Einheit zum Quer-Entgraten und eine Einheit zum Längs-Entgraten) dienen der Beseitigung des Schweißwulstes nach Abschluss einer Schweißoperation. Die Bewegungen der Entgrateinheiten werden über entsprechende Kurvenscheiben der Steuerwelle gesteuert.

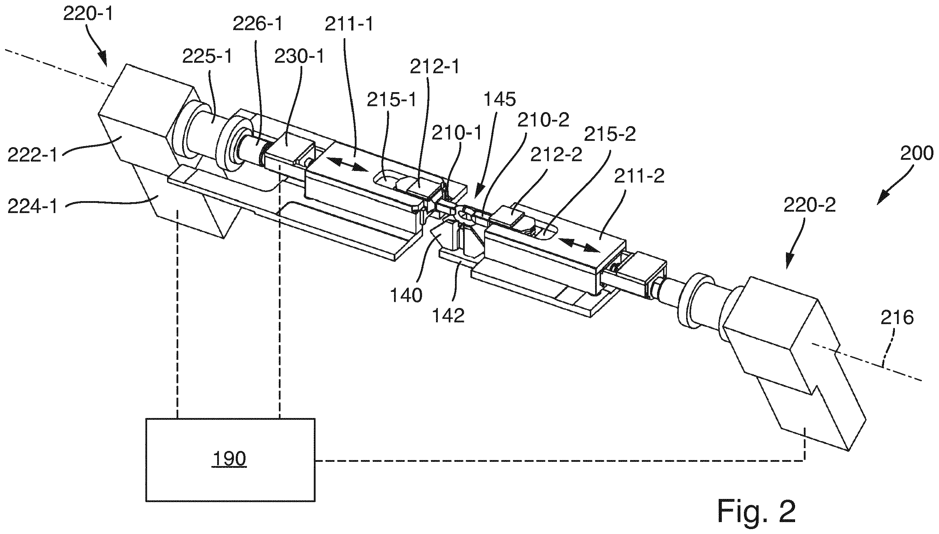

Die Kettenschweißmaschine 100 ist mit einem Stauchsystem 250 mit zwei synchron arbeitenden servohydraulischen Achsen ausgestattet, die über Steuersignale von einer Steuereinheit 190 der Kettenschweißmaschine gesteuert werden. Mechanische und hydraulisch-mechanische Komponenten des Stauchsystems bilden eine Baugruppe 200, die im Bereich der Vorderseite der Kettenschweißmaschine an deren Oberseite eingebaut ist und die in Fig. 2 im Detail zu erkennen ist.

Zu der Baugruppe 200 gehören zwei linear beweglich gelagerte Stauchstahlhalter 212-1, 212-2, die an gegenüberliegenden Seiten der Schweißposition angeordnet sind und an einander zugewandten Seiten Stauchstähle 210-1, 210-2 zum Übertragen einer Stauchkraft und eines Stauchwegs auf das Kettenglied tragen. Die Stauchstähle werden abhängig vom Drahtdurchmesser des Kettenglieds angepasst. Um eine optimale Auflagefläche der Stauchstähle an den Kettengliedbögen zu erreichen, haben die Stauchstähle vorzugsweise eine um einige Grad leicht dem Kettenbogen angepasste Auflagefläche.

Jeder der Stauchstahlhalter 212-1, 212-2 ist in einer entsprechenden Aufnahme eines zugeordneten Stauchschlittens 215-1 bzw. 215-2 befestigt. Die Stauchschlitten laufen in parallel zu einer Stauchrichtung 216 ausgerichteten Führungen 211-1, 211-2 und sind linear entlang der Stauchrichtung 216 aufeinander zu und voneinander weg verfahrbar.

Die Bereitstellung der Kraft sowie des Wegs dieser Verfahrbewegungen (als Funktion der Zeit) erfolgt durch das Stauchsystem 250 gemäß einem vorgebbaren Stauchablauf. Für jeden der Stauchschlitten ist hierzu ein gesonderter Servoantrieb, nämlich ein servohydraulischer Antrieb 220-1, 220-2 vorgesehen, der die Bewegungen des damit gekoppelten Stauchstahlhalters koordiniert mit den Bewegungen des gegenüberliegenden Stauchstahlhalters erzeugt. Die Antriebe erhalten von der Steuereinheit die gleichen Steuersignale, so dass sie sich symmetrisch bzw. gespiegelt aufeinander zu und voneinander weg bewegen können.

Der Aufbau wird beispielhaft anhand des servohydraulischen Antriebs 220-1 erläutert. Der servohydraulische Antrieb 220-1 umfasst einen Basisblock 222-1, in welchem ein Ventilblock und eine Hydraulikpumpe untergebracht sind. Der Servomotor zum Antrieb der Hydraulikpumpe sowie ein Kompensator (Speicher) sind in einem am Basisblock montierten Motorblock 224-1 untergebracht. Der von der Hydraulikpumpe angetriebene, mit einem Wegmesssystemausgestattete Hydraulikzylinder 225-1 ist an der dem Stauchschlitten zugewandten Seite des Basisblocks 222-1 so angebracht, dass die Bewegungsachse der Kolbenstange 226-1 parallel zur Stauchrichtung verläuft. Zwischen der Kolbenstange und dem daran angebrachten Stauchschlitten ist im Kraftfluss eine Kraftmesseinrichtung 230-1 zwischengeschaltet, deren Signale an einen Eingang der Steuereinheit 190 übertragen werden. An der der Schweißposition 145 gegenüber liegenden Seite ist die Baugruppe 200 gegengleich aufgebaut. Das Stauchsystem 250 hat somit zwei autarke, servohydraulische Linear-Achsen für den direkten Stauchantrieb der Stauchschlitten 215-1, 215-2. In einer Variante kann eine gesonderte Kraftmesseinrichtung nur auf einer der beiden Seiten vorgesehen sein.

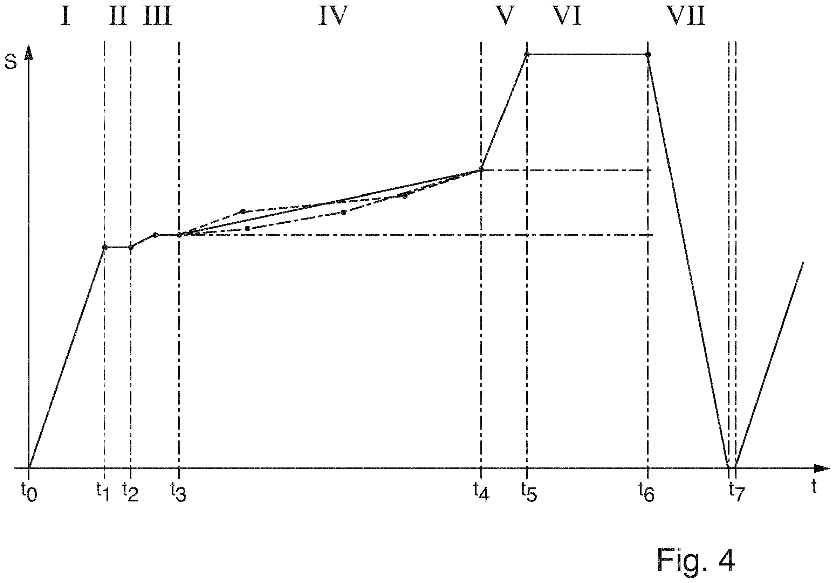

Anhand der Fig. 3 und 4 werden nachfolgend verschiedene Phasen einer Stauchoperation im Einzelnen erläutert. Die Fig. 3A bis 3D zeigen dabei die Stellungen der am Stauchprozess beteiligten Werkzeuge und Komponenten zu verschiedenen Zeitpunkten der Stauchoperation. Die mit dem in der Schweißposition aufgenommenen Kettenglied verbundenen anderen Kettenglieder des Kettenstrangs sind nur in Fig. 3A gezeigt und sonst aus Gründen der Übersichtlichkeit weggelassen. Fig. 4 zeigt schematisch die Kinematik eines Zyklus in Form eines Weg-/Zeit-Diagramms, wobei auf der x-Achse die Zeit t und auf der y-Achse die Hublage bzw. der Weg S eines Stauchschlittens aufgetragen ist. Die Steuerwelle dreht sich kontinuierlich mit konstanter Drehzahl, so dass die Zeitachse (x-Achse) auch der Drehposition der Steuerwelle entspricht.

Fig. 3A zeigt die Ausgangsposition der Werkzeuge zu Beginn eines Zyklus zeitlich vor Durchfahren des Vorhubs. Die Stauchschlitten mit den Stauchstahlhaltern und Stauchstählen sind in eine maximal zurückgezogene Position zurückgefahren, um den Weitertransport des Kettenstrangs durch die Kettentransporteinrichtung zu ermöglichen und nach Abschluss eines vorausgegangenen Schweißzyklus das nächste, noch nicht verschweißte Kettenglied 180 in die Schweißposition auf dem Amboss zu fördern. Die Ausgangsposition entspricht dem Zeitpunkt t₀ in Fig. 4.

Dann erfolgt in Phase I der sogenannte Vorhub, während welchem die Stauchstähle unter einer Lageregelung bzw. Positionsregelung mit relativ hoher Hubgeschwindigkeit in Richtung der zugewandten Kettengliedbögen auf eine vordefinierte Position verfahren werden. Dieser Zustand ist zum Zeitpunkt t₁ erreicht. Fig. 3B zeigt die Konfiguration am Ende der Phase I (Vorhub-Phase). Vorschubgeschwindigkeiten können z.B. im Bereich von mehreren 100 mm/s liegen, die benötigte Kraft liegt typischerweise im Bereich weniger 1.000 N, während der Hub (Länge des Wegs) im Bereich von mehreren 10 mm liegen kann. Für den Vorhub werden in vielen Fällen weniger als 500 ms benötigt.

Während der Phase II fahren die Elektroden herunter und umschließen die zu verschweißenden Kettengliedschenkel form- und kraftschlüssig (vgl. Fig. 3C). Für die Phase II des Schließens der Elektroden ist eine Rast im Vorschub bis zum Zeitpunkt t₂ vorgesehen.

Nach dem Anlegen der Stauchstähle an den Kettengliedbögen wird in der Phase III der Teilungsausgleich ausgeführt, der vor jeder Schweißung eine konstante Kontaktkraft an den Stoßflächen der aufeinander zugewandten Drahtenden sicherstellen soll. In dieser Phase III arbeitet das Stauchsystem unter Lageregelung mit Kraftüberwachung, um das Erreichen der Anfangskraft erfassen zu können. Der in dieser Phase zurückzulegende Weg ist stark von der Geometrie der Kettenglieder abhängig und kann von Kettenglied zu Kettenglied variieren. Der Weg bis zum Ende der Phase III bei t₃ liegt typischerweise im Bereich zwischen 0 mm und ca. 1 mm. Da die Stauchstähle hier gegen die Rückfederungskräfte des aufgebogenen Kettenglieds arbeiten müssen, liegen die aufzubringenden Kräfte über denen der Phase I, z.B. im Bereich zwischen 10.000 N und weniger als 100.000 N. Die Geschwindigkeit ist typischerweise deutlich niedriger als beim Vorhub und kann beispielsweise zwischen 5 und 20 mm/s liegen. Die benötigten Zeiten sind häufig geringer als die Zeiten für den Vorhub und können zum Beispiel zwischen 100 ms und 500 ms liegen.

In dieser Phase III des Teilungsausgleichs findet auch die Synchronisation zwischen dem Zündwinkel der Schweißsteuerung und dem Stauchablauf statt.

Zum richtigen Zeitpunkt wird der Schweißstrom eingeschaltet. Der Schweißstrom fließt von der Sekundärseite des Schweißtransformators über die beiden indirekt wassergekühlten Elektrodenpaare zu den zu verschweißenden Kettengliedenden und wird dort entsprechend dem Jouleschen Gesetz in Nutzwärme umgesetzt. Damit beginnt die Erwärmungsphase (Phase IV). Durch die Temperaturerhöhung nimmt der Formänderungswiderstand an den Gliedenden ab. Bei gekerbten Kettengliedern wird zudem unter der Einwirkung der Kontaktkraft die Kontaktfläche zwischen den Kettengliedenden vergrößert. Dadurch kann bei genügend hoher Stromstärke (bis zu einigen 10.000 A) die nötige Temperatur (bei Stählen zum Beispiel bis zu ca. 1.100 bis 1.300 °C) erreicht werden. Die Höhe der Geschwindigkeit beeinflusst dabei die Vergrößerung der Kontaktfläche bei Erweichung des Materials. Diese Vergrößerung wirkt sich auf die Temperaturverteilung aus. Durch eine weitgehend homogene Temperaturverteilung, erreicht durch eine optimal gewählte Kontaktkraft, Stauchkraft und Schweiß-Stromzeit, können die erhitzten, teigigen und teils bereits flüssigen Gliedenden ineinander gestaucht werden. Die Erwärmungsphase ist zum Zeitpunkt t₄ abgeschlossen.

Die Erwärmungsphase (Phase IV) kann von Kettenglied zu Kettenglied sowie von Material zu Material sehr unterschiedlich sein. Der Vorschub der Stauchstähle erfolgt in der Erwärmungsphase auf Basis einer Lageregelung gemäß dem vorher frei programmierbaren Stauchablaufprofil mit definierbarem Zusammenhang zwischen Stauchweg und Zeitablauf. Fig. 4 zeigt anhand der durchgezogenen und gestrichelten Linien schematisch drei unterschiedliche mögliche Stauchablaufprofile in der Erwärmungsphase. Die von den Stauchschlitten zurückzulegenden Wege (Hub) können in Phase IV zum Beispiel im Bereich zwischen 1 mm und 5 mm liegen, Vorschubgeschwindigkeiten können beispielsweise zwischen 3 mm/s und 15 mm/s liegen. Die aufzubringenden Kräfte können beispielsweise im Bereich zwischen 20.000 N und 150.000 N liegen, also ein breites Spektrum von Kräften umfassen. Die Erwärmungsphase dauert häufig zwischen ca. 250 ms und 1.000 ms, die Zeiten können aber auch darüber oder darunter liegen.

Vor dem nachfolgenden Endstauchen (Phase V) wird der Strom in der Regel gedrosselt.

Der Weg-Zeitverlauf während des Endstauchens (Phase V, zwischen t₄ und t₅) erfolgt ebenfalls vorzugsweise unter Lageregelung, wobei dieser Verlauf ebenfalls frei programmierbar ist. Die wirkenden Kräfte sind typischerweise nochmals höher als während der Erwärmungsphase und können beispielsweise zwischen 40.000 N und 150.000 N liegen. Der Hub ist meist etwas kleiner als bei der Erwärmungsphase (beispielsweise zwischen 1 mm und 3 mm) bei Vorschubgeschwindigkeiten, die deutlich höher sind als in der Erwärmungsphase (beispielsweise zwischen 10 mm/s und 100 mm/s).

Nach dem Endstauchen schließt sich zum Zeitpunkt t₅ eine Phase VI ohne Vorschub der Stauchschlitten an. Während dieser Phase (Haltephase) findet das Entgraten des Kettenglieds, also die Beseitigung des Wulstes an der Schweißstelle 182, durch Querabgraten und nachfolgendes Längsabgraten statt. Außerdem kann das Material abkühlen. Die am Ende des Endstauchens aufgebauten Kräfte bleiben weitgehend erhalten. Typische Zeiten der Phase VI können zwischen 300 ms und 1.500 ms liegen. Fig. 3D zeigt die Situation nach dem Ende der Erwärmungsphase und der Beseitigung des Grats an der Schweißstelle 182.

Danach schließt sich zum Zeitpunkt t₆ die Phase VII an, in welcher das verschweißte Kettenglied entlastet wird und die Stauchstähle zurück in ihre am weitesten zurückgezogene Position (vgl. Fig. 3A) gezogen werden. Dieser Vorhub in Rückwärtsrichtung wird unter Lageregelung mit hoher Hubgeschwindigkeit (z.B. -200 mm/s bis - 600 mm/s) durchgeführt und ist zum Zeitpunkt t₇ beendet. Danach kann sich eine kurze Rastphase ohne Vorschub (Dauer typischerweise einige ms) anschließen, bevor der nächste Zyklus mit Phase I beginnt.

Das Gefüge in der Schweißstelle 182 sowie in der Wärmeeinflusszone hängt sehr stark vom Betrag des Stauchwegs, der Stauchgeschwindigkeit und der Stauchbeschleunigung im Laufe der Erwärmungsphase (Phase IV) und der Endstauchphase (Phase V) sowie vom Zeitpunkt t₄ des Beginns des Endstauchens (Phase V) ab. Des Weiteren haben die Erhitzung und die Abkühlphase einen großen Einfluss auf das Gefüge. Mithilfe des frei programmierbaren Stauchsystems können hier individuell optimierte Bedingungen geschaffen werden.

Einige Vorteile und Besonderheiten des Ausführungsbeispiels werden nachfolgend kurz zusammengefasst. Bei dem Stauchsystem 250 mit zwei autarken, servohydraulischen Linear-Achsen für den direkten Stauchantrieb der Stauchschlitten erfolgt die Krafteinleitung zwischen Antrieb und Werkstück (Kettenglied) direkt, so dass keine weiteren mechanischen Komponenten, wie z.B. mechanische Stauchhebel, zwischengeschaltet sind. Der Vorhub kann mit großem Weg und hoher Geschwindigkeit sowie mit geringer Kraft gefahren werden. Dadurch kann ein fertig geschweißtes Kettenglied schnell für den Weitertransport der Kette freigegeben werden und der Vorhub bis zum Anliegen am Kettenglied für den nachfolgenden Zyklus kann ebenfalls schnell erfolgen. Fertigungstoleranzen der gebogenen Kettenglieder können beim Schritt des Teilungsausgleichs (Phase III) so ausgeglichen werden, dass eine vorprogrammierte Anfangskraft (Kontaktkraft am Schweißstoß) aufgebaut werden kann.

Eine integrierte Kraftüberwachung (Online-Monitoring) kann nach dem "Hüllkurvenprinzip" einen permanenten Abgleich zwischen dem tatsächlichen Ist-Kraftverlauf und einem vorgegebenen Soll-Kraftverlauf ermöglichen. Bei Überschreitung oder Unterschreitung von vordefinierbaren oberen und unteren Grenzen der Hüllkurve, also bei Überschreiten einer vorgebbaren Abweichung vom Soll-Verlauf, kann eine Fehlermeldung bzw. ein entsprechendes Fehlersignal ausgegeben werden. Gegebenenfalls kann der Stauchablauf bei Empfang eines Fehlersignals durch die Steuereinheit abgebrochen werden, um Zerstörungen an der Maschine und/oder an der Kette zu vermeiden. Ein frei programmierbares Stauchablaufprofil erlaubt eine Optimierung des Stauchablaufs für unterschiedlichste Kettengliedergeometrien und Materialien. Durch die Kraftüberwachung und die Synchronisation zwischen dem Zündwinkel des sekundärseitigen Schweißstroms und dem Stauchablauf kann erreicht werden, dass jede Schweißung den optimalen Schweißstrom-Start und somit auch eine reproduzierbare Anfangskraft für jede Schweißung erhält.

Bei der Kettenschweißmaschine des Ausführungsbeispiels wird eine definierte, in Abhängigkeit des Drahtquerschnittes einstellbare Anfangskraft aufgebracht und überwacht. Durch die Kraftüberwachung und den netzsynchronen Start des Stauchablaufes herrschen zu Beginn jeder Schweißung die gleichen Anfangsbedingungen. Die Messung der Stauchkraft erfolgt über den gesamten Schweißprozess und wird durch eine definierte Hüllkurve überwacht. Gegebenenfalls kann ein Fehlersignal ausgegeben werden. Die Maschine kann bei Bedarf bei Verlassen der Hüllkurve stillgesetzt werden. Der bisher durch die Stauchkurvengestalt starr vorgegebene Stauchablauf kann für jede Kettenabmessung und jeden Kettenwerkstoff variabel programmiert werden. Durch diese Programmierung des Stauchablaufes kann die Erwärmungsphase sowie die Endstauchphase produkt- (geometrie-und werkstoffabhängig) und kundenindividuell (Knowhow, Erfahrung) reproduzierbar definiert werden.

Ausführungsformen der dargestellten Art (mit zwei numerisch gesteuerten Linear-Achsen auf den beiden Seiten der Schweißposition) bieten eine weitgehend direkte Einleitung der Stauchkraft sowie des Stauchwegs, um mechanische Komplexität und Elastizitäten gering zu halten. Um den frei programmierbaren Stauchablauf und auch die definierte Stauchkraft möglichst direkt am Schweißstoß einzuleiten, kann der Servoantrieb so nah und direkt wie möglich am Schweißstoß angebracht werden. Da bei der direkten Einleitung von Stauchkräften und Stauchwegen auf mechanische Umlenkungen mit Übersetzung oder Untersetzung verzichtet wird, müssen in diesem Fall die gewünschte Stauchkraft im Schweißstoß sowie die geforderte Stauchgeschwindigkeit 1:1 vom Servoantriebssystem von beiden Seiten auf das zu schweißende Kettenglied aufgebracht werden.

Sollte diese Konstruktion z.B. aus Bauraumgründen nicht möglich und/oder aus anderen Gründen nicht gewünscht sein, sind alternative Konstruktionen möglich.

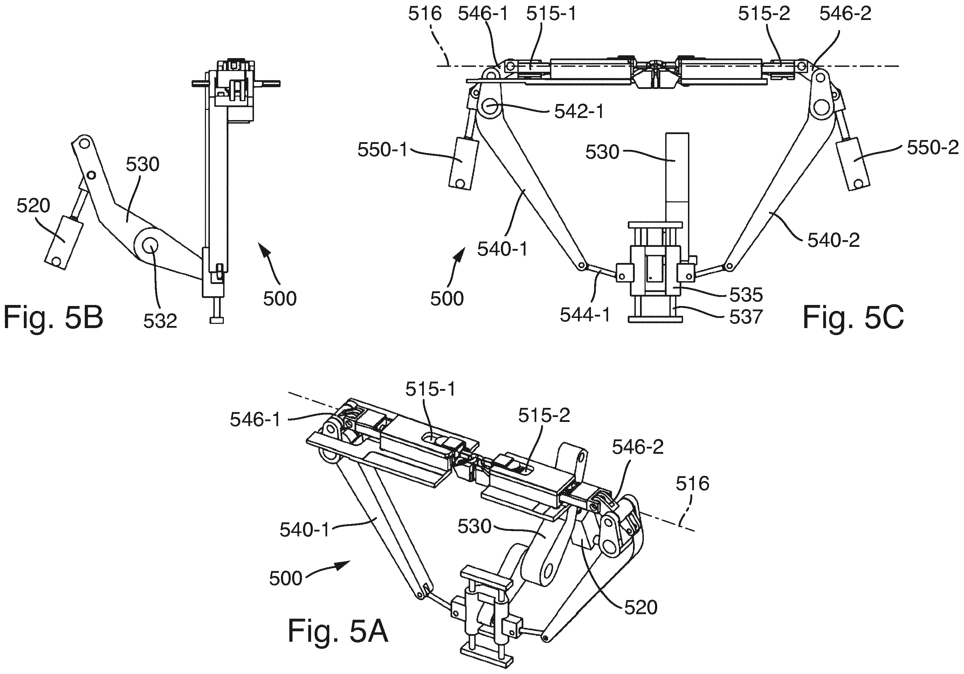

Die Fig. 5A, 5B und 5C zeigen verschiedene Ansichten einer Baugruppe 500 eines servotechnisch gesteuerten Stauchsystems gemäß einer ersten alternativen Ausführungsform. Die Baugruppe hat, genau wie die Baugruppe des Ausführungsbeispiel der Fig. 1 und 2, zwei linear entlang einer horizontalen Stauchrichtung 516 aufeinander zu und voneinander weg verfahrbare Stauchschlitten 515-1, 515-2 zum Tragen der beiden Stauchstahlhalter. Die Baulänge in Richtung der Stauchrichtung 516 ist im Vergleich zur ersten Ausführungsform durch Verzicht auf die Verwendung von zwei autarken servohydraulischen Linear-Achsen für den direkten Stauchantrieb verkürzt, so dass in Stauchrichtung eine kompaktere Bauform möglich ist.

Die Bewegungen der Stauchschlitten 515-1, 515-2 werden über einen Hebelmechanismus und insgesamt drei Antriebe gesteuert. Als Haupt-Antrieb dient ein Servoantrieb 520, der unterhalb der Stauchschlitten hinter diesen im Maschinengestell eingebaut ist. Der Servoantrieb wirkt auf einen hinteren Stauchhebel 530, der um eine parallel zur Steuerwelle verlaufende horizontale Schwenkachse 532 verschwenkbar ist. Das andere Ende des hinteren Stauchhebels 530 ist an einen mittleren Stauchschlitten 535 angelenkt, der an vertikalen Führungsschienen 537 vertikal verschiebbar geführt ist. Die Auf- und Ab-Bewegung des mittleren Stauchschlittens wird über weitere Hebel auf die Stauchschlitten 515-1, 515-2 beidseitig symmetrisch übertragen.

Wie besonders gut in Fig. 5C zu erkennen ist, ist für den links gezeigten ersten Stauchschlitten 515-1 ein zweiarmiger erster Stauchhebel 540-1 vorgesehen, der um eine horizontale Schwenkachse 542-1 verschwenkbar ist. Zwischen dem ersten Stauchhebel 540-1 und dem mittleren Stauchschlitten 535 ist ein beidseitig angelenktes Verbindungselement 544-1 eingefügt. Am Ende des gegenüberliegenden Hebelarms ist ein weiterer zweiarmiger Hebel 546-1 verschwenkbar gelagert. Dadurch wird an der dem Stauchschlitten 515-1 zugewandten Seite des ersten Stauchhebels 540-1 ein Kniehebelmechanismus geschaffen. Ein Hebelarm des weiteren Hebels 546-1 ist gelenkig mit dem ersten Stauchschlitten 515-1 gekoppelt. Am gegenüberliegenden Hebelarm greift ein vom Servoantrieb 520 gesonderter weiterer Antrieb 550-1 an, der hier auch als "Antrieb Stauchen-Vorhub" bezeichnet wird. Dieser Antrieb ist in Fig. 5A und 5C aus Gründen der Übersichtlichkeit nicht dargestellt. Für den gegenüberliegenden Stauchschlitten 515-2 ist ein Hebelmechanismus mit identischem Aufbau, symmetrisch gespiegelt, vorgesehen.

Mit dieser Anordnung sind die gleichen Stauchabläufe durchführbar, wie sie im Zusammenhang mit dem ersten Ausführungsbeispiel im Detail beschrieben werden (vgl. Fig. 3 und 4 und zugehöriger Beschreibungstext). Während dort jedoch alle Bewegungen der horizontalen Stauchschlitten, also sowohl die relativ langsamen Bewegungen mit hoher Kraft beim eigentlichen Stauchvorgang, als auch die relativ schnellen Bewegungen während der VorhubPhasen, ausschließlich mittels der beiden servohydraulischen Antriebe der Linear-Achsen erzeugt werden, werden bei der ersten alternativen Ausführungsform die weiteren Antriebe 550-1, 550-2 zur Erzeugung der schnellen Vorhubbewegungen aktiviert, die aufgrund der Hebelübersetzung des ersten und zweiten Stauchhebels mit Hilfe des Servoantriebs 520 nicht mit der gewünschten Geschwindigkeit erzeugt werden könnten. Mit Hilfe der weiteren Antriebe 550-1, 550-2 wird während der Vorhubphase der Kniehebelmechanismus im Bereich der weiteren Hebel 546-1, 546-2 ausgelöst, welche eine sehr schnelle und weitgehend kraftlose Bewegung der Stauchschlitten 515-1, 515-2 in Richtung der Schweißposition (oder in Rückwärtsrichtung) bewirkt. Beim Vorhub vor dem Schweißen sorgt die Vorhubbewegung für ein schnelles Anlegen der Stauchstähle an das Kettenglied bevor weitere Kräfte aufgebracht werden. Nach Abschluss eines Schweißvorgangs dient die schnelle Vorhubbewegung mit großem Weg dazu, dass das geschweißte Kettenglied schnell wieder frei wird, so dass der Kettenstrang um ein Kettenglied weiter transportiert werden kann.

Die weiteren Antriebe 550-1, 550-2 sind im Beispielsfall durch gesonderte Servoantriebe realisiert.

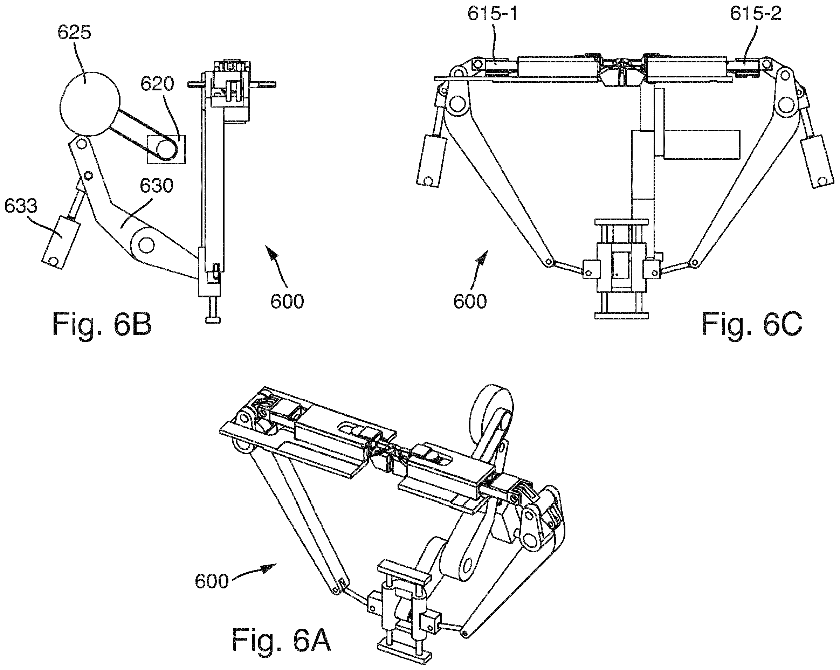

Eine zweite alternative Ausführungsform einer Baugruppe 600 ist in den Fig. 6A bis 6C in drei Ansichten gezeigt, die den Ansichten der Fig. 5 entsprechen. Die Konstruktion im Bereich der Stauchschlitten 615-1, 615-2 und der darauf wirkenden Hebelmechanismen ist die gleiche wie bei der ersten alternativen Ausführungsform (Fig. 5), weshalb auf die dortige Beschreibung verwiesen wird.

Im Unterschied zur dortigen Ausführungsform treibt der Servoantrieb 620 des Stauchsystems den hinteren Stauchhebel 630 nicht direkt an, sondern indirekt über eine Kurvenscheibe bzw. einen Exzenter 625, die bzw. der bei der dargestellten Konstruktion über einen gesonderten Trieb (beispielsweise Riementrieb, Zahnkettentrieb, Kettentrieb, Zahnrad oder dergleichen) angetrieben wird. Ein krafteinleitendes Element, beispielsweise ein hydraulischer oder pneumatischer Zylinder 633 oder eine Feder, sorgt für eine dauerhafte Ankopplung des zugewandten Hebelarms des hinteren Stauchhebels 630 an die Kurve der Kurvenscheibe 625. Hinsichtlich der Funktion wird ansonsten auf die Beschreibung der ersten alternativen Ausführungsform verwiesen.

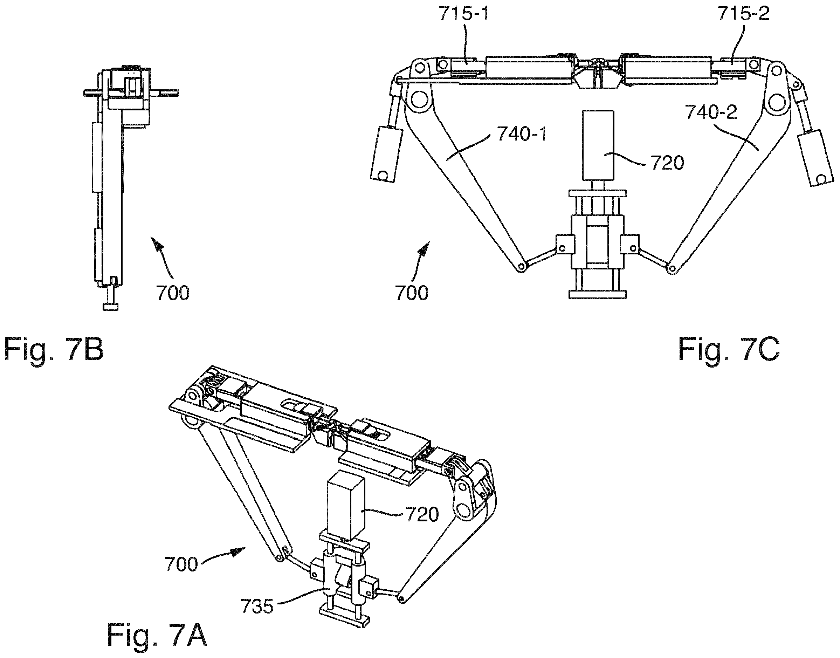

Eine dritte alternative Ausführungsform einer Baugruppe 700 ist in den Fig. 7A bis 7C in den gleichen Ansichten gezeigt wie in den Fig. 5 und 6. Von diesen unterscheidet sich diese Variante in der Art und Weise, wie der Hauptantrieb (Servoantrieb 720) des Stauchsystems an den Hebelmechanismus mit den beiden Stauchhebeln 740-1, 740-2 angekoppelt ist. Der Servoantrieb 720 wirkt hier direkt, also ohne Zwischenschaltung eines Hebels, auf den vertikal verschiebbar geführten mittleren Stauchschlitten 735, um diesen für die Schließbewegung der Stauchschlitten 715-1, 715-2 nach unten zu drücken bzw. für die Öffnungsbewegung nach oben zu ziehen. Diese Konstruktion kommt somit ohne den hinteren Stauchhebel aus und hat daher parallel zur Ebene der ersten und zweiten Stauchhebel eine sehr flache Bauweise (vgl. Fig. 7B).

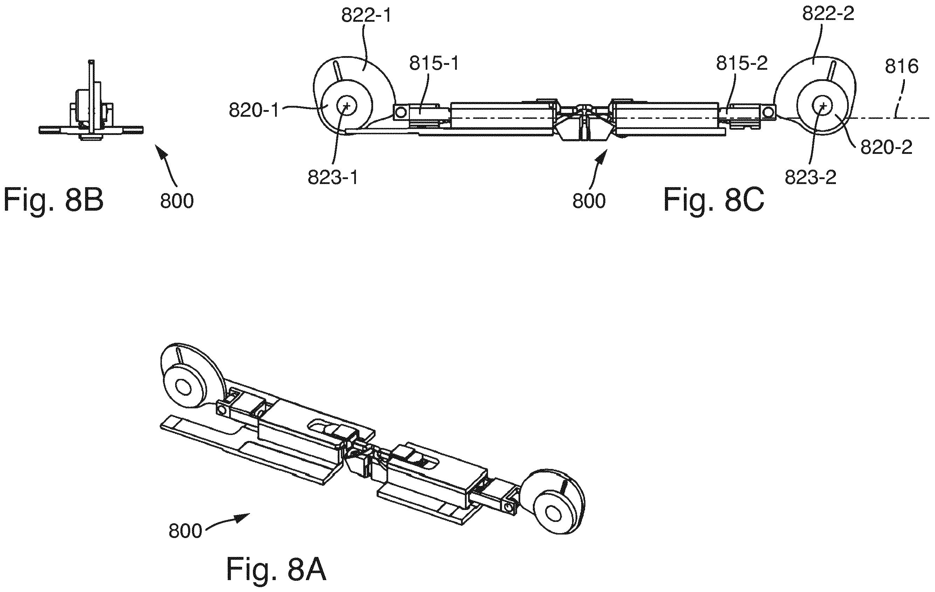

Eine vierte alternative Ausführungsform einer Baugruppe 800 des Stauchsystems ist in den Fig. 8A bis 8C in entsprechenden Ansichten gezeigt. Eine Besonderheit dieser Variante besteht darin, dass - genau wie beim ersten Ausführungsbeispiel - keine zusätzlichen bzw. separaten Antriebe für den Vorhub beim Stauchen vorgesehen sind. Ähnlich wie bei dem ersten Ausführungsbeispiel hat das Stauchsystem zwei autarke Servoantriebe 820-1, 820-1 für die beiden Stauchschlitten 815-1, 815-2. Es handelt sich jedoch nicht um koaxial zur Stauchrichtung wirkende Linear-Achsen. Stattdessen treibt jeder der Servoantriebe eine Kurvenscheibe 822-1, 822-2 an, die um eine Drehachse 823-1, 823-2 drehbar ist, welche in der die Stauchrichtung 816 enthaltenden Horizontalebene senkrecht zur Stauchrichtung verläuft. Die deutlich unterschiedlichen Hubgeschwindigkeiten zwischen den Vorhubphasen (hohe Geschwindigkeit, geringe Kraft) und den Phasen beim Stauchen sind durch deutlich unterschiedlich geneigte Abschnitte der Kurven (Stauchkurven) realisiert.

An diesen Beispielen wird ersichtlich, dass die beanspruchte Erfindung auf verschiedene Weise umgesetzt werden kann, um die Kettenschweißmaschine an unterschiedliche Rahmenbedingungen (begrenzten Bauraum) anzupassen. Mit den Baugruppen der Fig. 5 bis 8 sind die gleichen Stauchabläufe durchführbar, wie sie im Zusammenhang mit dem ersten Ausführungsbeispiel im Detail beschrieben werden (vgl. Fig. 3 und 4 und zugehöriger Beschreibungstext).

## Patentansprüche

1. Kettenschweißmaschine (100) zum Widerstandsstumpfschweißen von Kettengliedern (180) mittels Pressstumpfschweißen umfassend:
ein Maschinengestell (110);
eine Steuerwelle zur zeitlichen Steuerung von kinematischen Funktionen der Kettenschweißmaschine;
eine Kettentransporteinrichtung zum Zuführen von nicht verschweißten Kettengliedern zu einer Schweißposition (145) und zum Abführen geschweißter Kettenglieder von der Schweißposition nach einer Schweißoperation;
eine Elektrodenanordnung mit mindestens einem Paar von auf die zu verschweißenden Kettengliedenden zustellbaren Elektroden (130-1, 130-2) zum Zuführen von Schweißstrom;
zwei beweglich gelagerte Stauchstahlhalter (212-1-212-2), die an gegenüberliegenden Seiten der Schweißposition (145) angeordnet sind und an einander zugewandten Seiten Stauchstähle (210-1, 210-2) zum Übertragen einer Stauchkraft und eines Stauchwegs auf das Kettenglied tragen;
ein auf die Stauchstahlhalter wirkendes Stauchsystem (250) zur Bereitstellung der Stauchkraft sowie des Stauchweges gemäß einem vorgebbaren Stauchablauf,
**dadurch gekennzeichnet, dass**
das Stauchsystem (250) als ein unabhängig von der Steuerwelle frei programmierbares Stauchsystem zur Programmierung eines von der Steuerwelle unabhängigen Stauchablaufprofils mit definierbarem Zusammenhang zwischen Stauchweg und Zeitablauf ausgelegt ist.

2. Kettenschweißmaschine nach Anspruch 1, **dadurch gekennzeichnet, dass** das Stauchsystem (250) so konfiguriert ist, dass während eines gesamten Schweißablaufs eine Messung der Stauchkraft erfolgt und dass der Stauchablauf zusätzlich in Abhängigkeit von der gemessenen Stauchkraft gesteuert wird.

3. Kettenschweißmaschine nach Anspruch 2, **dadurch gekennzeichnet, dass** in einer Steuerung des Stauchsystems (250) eine Hüllkurve definiert ist, welche den Bereich zulässiger Stauchkräfte für jede Phase des Stauchprozesses definiert, und dass die Steuerung des Stauchsystems (250) so programmiert ist, dass beim Verlassen der Hüllkurve ein Fehlersignal ausgegeben wird, wobei vorzugsweise nach Empfang des Fehlersignals der Stauchablauf sofort oder nach Beenden eines Zyklus angehalten wird.

4. Kettenschweißmaschine nach einem der vorhergehenden Ansprüche, **dadurch gekennzeichnet, dass** das Stauchsystem (250) so konfiguriert ist, dass während eines gesamten Schweißablaufs eine Messung des Sekundärstroms eines Schweißtransformators erfolgt und dass der Stauchablauf zusätzlich in Abhängigkeit von dem gemessenen Sekundärstrom gesteuert wird.

5. Kettenschweißmaschine nach einem der vorhergehenden Ansprüche, **dadurch gekennzeichnet, dass** das Stauchsystem (250) derart konfiguriert ist, dass eine Synchronisation zwischen einem Zündwinkel eines sekundärseitigen Schweißstroms eines Schweißtransformators (135) und dem Stauchablauf realisiert ist.

6. Kettenschweißmaschine nach einem der vorhergehenden Ansprüche, **dadurch gekennzeichnet, dass** das Stauchsystem (250) als servotechnisch gesteuertes Stauchsystem mit mindestens einem Servoantrieb (220-1, 220-2) ausgelegt ist.

7. Kettenschweißmaschine nach Anspruch 6, **dadurch gekennzeichnet, dass** der Servoantrieb ein servohydraulischer Antrieb ist.

8. Kettenschweißmaschine nach Anspruch 6 oder 7, **dadurch gekennzeichnet, dass** Stauchsystem (250) als servotechnisch gesteuertes Stauchsystem mit Kraftüberwachung und/oder Schweißstromüberwachung ausgelegt ist.

9. Kettenschweißmaschine nach einem der vorhergehenden Ansprüche, **dadurch gekennzeichnet, dass** das Stauchsystem (250) für jeden der Stauchstahlhalter (212-1, 212-2) einen gesonderten Servoantrieb (220-1, 220-2) zur Erzeugung von Bewegungen des damit gekoppelten Stauchstahlhalters aufweist.

10. Kettenschweißmaschine nach einem der vorhergehenden Ansprüche, **dadurch gekennzeichnet, dass** das Stauchsystem (250) zwei linear entlang einer Stauchrichtung (216) verfahrbare Stauchschlitten (215-1, 215-2) zum Tragen der Stauchstahlhalter (212-1, 212-2) aufweist.

11. Kettenschweißmaschine nach Anspruch 10, **dadurch gekennzeichnet, dass** das Stauchsystem (250) zwei autarke servohydraulische Linear-Achsen für den direkten Stauchantrieb der Stauchschlitten (215-1, 215-2) aufweist.

12. Kettenschweißmaschine nach einem der Ansprüche 6 bis 11, **dadurch gekennzeichnet, dass** zwischen einem Servoantrieb (220-1) des Stauchsystems (250) und einem zugeordneten Stauchschlitten (215-1) ein Kraftsensor (230-1) angeordnet ist.

13. Kettenschweißmaschine nach einem der vorhergehenden Ansprüche, **dadurch gekennzeichnet, dass** die Steuerwelle eine in dem Maschinengestell (110) gelagerte mechanische Steuerwelle zur zeitlichen Steuerung von kinematischen Funktionen der Kettenschweißmaschine über Kurvenscheiben ist.

## Claims

1. Chain welding machine (100) for resistance butt welding of chain links (180) by means of press butt welding, comprising:
a machine frame (110);
a control shaft for time controlling of kinematic functions of the chain welding machine;
a chain transport device for feeding not welded chain links to a welding position (145) and for taking away welded chain links from the welding position after a welding operation;
an electrode arrangement having at least one pair of electrodes (130-1, 130-2) infeedable to the chain link ends to be welded for supplying welding current;
two movably mounted upsetting steel holders (212-1, 212-2) disposed on opposite sides of the welding position (145) and on sides facing each other carrying upsetting steels (210-1, 210-2) for transferring an upsetting force and an upsetting path to the chain link;
an upsetting system (250) acting on the upsetting steel holders for providing the upsetting force and the upsetting path according to a predefinable upsetting procedure,
**characterized in that**
the upsetting system (250) is designed as a freely programmable upsetting system independent of the control shaft for programming an upsetting procedure profile independent of the control shaft with a definable correlation between upsetting path and course of time.

2. Chain welding machine according to claim 1, **characterized in that** the upsetting system (250) is configured such that during an entire welding procedure measuring of the upsetting force is performed and **in that** the upsetting procedure is controlled additionally as a function of the measured upsetting force.

3. Chain welding machine according to claim 2, **characterized in that** in controlling the upsetting system (250) an envelope is defined which defines the range of permissible upsetting forces for each phase of the upsetting process, and **in that** the control of the upsetting system (250) is programmed such that, when leaving the envelope, an error signal is output, wherein preferably upon receiving the error signal the upsetting procedure is stopped immediately or after completion of a cycle.

4. Chain welding machine according to any of the preceding claims, **characterized in that** the upsetting system (250) is configured such that during an entire welding procedure measuring of the secondary current of a welding transformer is performed and **in that** the upsetting procedure is controlled additionally as a function of the measured secondary current.

5. Chain welding machine according to any of the preceding claims, **characterized in that** the upsetting system (250) is configured such that synchronization between a firing angle of a secondary side welding current of a welding transformer (135) and the upsetting procedure is implemented.

6. Chain welding machine according to any of the preceding claims, **characterized in that** the upsetting system (250) is designed as a servo-controlled upsetting system with at least one servo drive (220-1, 220-2).

7. Chain welding machine according to claim 6, **characterized in that** the servo drive is a servo-hydraulic drive.

8. Chain welding machine according to claim 6 or 7, **characterized in that** upsetting system (250) is designed as a servo-controlled upsetting system with force monitoring and/or welding current monitoring.

9. Chain welding machine according to any of the preceding claims, **characterized in that** the upsetting system (250) includes a separate servo drive (220-1, 220-2) for each of the upsetting steel holders (212-1, 212-2) for generating movements of the upsetting steel holder coupled thereto.

10. Chain welding machine according to any of the preceding claims, **characterized in that** the upsetting system (250) includes two upsetting carriages (215-1, 215-2) linearly displaceable along an upsetting direction (216) for carrying the upsetting steel holders (212-1, 212-2).

11. Chain welding machine according to claim 10, **characterized in that** the upsetting system (250) includes two autarkic servo-hydraulic linear axes for direct upsetting driving of the upsetting carriages (215-1, 215-2).

12. Chain welding machine according to any of claims 6 to 11, **characterized in that** a force sensor (230-1) is disposed between a servo drive (220-1) of the upsetting system (250) and an associated upsetting carriage (215-1).

13. Chain welding machine according to any of the preceding claims, **characterized in that** the control shaft is a mechanical control shaft mounted in the machine frame (110) for time controlling of kinematic functions of the chain welding machine via cam discs.

## Revendications

1. Machine de soudage de chaînes (100) pour le soudage bout à bout par résistance de maillons de chaîne (180) au moyen d'un soudage bout à bout par pression, comprenant :
un bâti de machine (110) ;
un arbre de commande pour la commande temporisée de fonctions cinématiques de la machine de soudage de chaînes ;
un dispositif de transport de chaîne pour acheminer des maillons de chaîne non soudés à une position de soudage (145) et pour évacuer des maillons de chaîne soudés depuis la position de soudage après une opération de soudage ;
un agencement d'électrodes comprenant au moins une paire d'électrodes (130-1, 130-2) pouvant être approchées des extrémités des maillons de chaîne à souder pour acheminer un courant de soudage ;
deux supports en acier de refoulement (212-1-212-2) supportés de manière déplaçable, qui sont disposés au niveau de côtés opposés de la position de soudage (145) et qui portent, au niveau de côtés tournés l'un vers l'autre, des éléments en acier de refoulement (210-1, 210-2) pour transférer une force de refoulement et une course de refoulement au maillon de chaîne ;
un système de refoulement (250) agissant sur le support en acier de refoulement pour fournir la force de refoulement ainsi que la course de refoulement selon un déroulement de refoulement prédéfinissable,
**caractérisée en ce que**
le système de refoulement (250) est conçu sous la forme d'un système de refoulement librement programmable indépendamment de l'arbre de commande pour programmer un profil de déroulement de refoulement indépendant de l'arbre de commande avec une relation définissable entre la course de refoulement et le déroulement dans le temps.

2. Machine de soudage de chaînes selon la revendication 1, **caractérisée en ce que** le système de refoulement (250) est configuré de telle sorte que pendant un déroulement de soudage total, il se produise une mesure de la force de refoulement et que le déroulement de refoulement soit commandé en outre en fonction de la force de refoulement mesurée.

3. Machine de soudage de chaînes selon la revendication 2, **caractérisée en ce que** dans une commande du système de refoulement (250), une courbe d'enveloppe est définie, laquelle définit la plage de forces de refoulement admissibles pour chaque phase du processus de refoulement, et **en ce que** la commande du système de refoulement (250) est programmée de telle sorte que dans le cas d'une sortie hors de la courbe d'enveloppe, un signal d'erreur soit émis, et à la réception du signal d'erreur, le déroulement de refoulement étant de préférence arrêté immédiatement ou après la fin d'un cycle.

4. Machine de soudage de chaînes selon l'une quelconque des revendications précédentes, **caractérisée en ce que** le système de refoulement (250) est configuré de telle sorte que pendant un déroulement de soudage total, une mesure du courant secondaire d'un transformateur de soudage soit effectuée et que le déroulement de refoulement soit commandé en outre en fonction du courant secondaire mesuré.

5. Machine de soudage de chaînes selon l'une quelconque des revendications précédentes, **caractérisée en ce que** le système de refoulement (250) est configuré de telle sorte qu'une synchronisation entre un angle d'allumage d'un courant de soudage côté secondaire d'un transformateur de soudage (135) et le déroulement de refoulement soit réalisée.

6. Machine de soudage de chaînes selon l'une quelconque des revendications précédentes, **caractérisée en ce que** le système de refoulement (250) est conçu sous forme de système de refoulement à commande par technique d'asservissement avec au moins un entraînement à servocommande (220-1, 220-2).

7. Machine de soudage de chaînes selon la revendication 6, **caractérisée en ce que** l'entraînement à servocommande est un entraînement servohydraulique.

8. Machine de soudage de chaînes selon la revendication 6 ou 7, **caractérisée en ce que** le système de refoulement (250) est conçu sous forme de système de refoulement à commande par technique d'asservissement avec surveillance de force et/ou surveillance du courant de soudage.

9. Machine de soudage de chaînes selon l'une quelconque des revendications précédentes, **caractérisée en ce que** le système de refoulement (250) pour chacun des supports en acier de refoulement (212-1, 212-2) présente un entraînement à servocommande séparé (220-1, 220-2) pour générer des déplacements du support en acier de refoulement accouplé à celui-ci.

10. Machine de soudage de chaînes selon l'une quelconque des revendications précédentes, **caractérisée en ce que** le système de refoulement (250) présente deux chariots de refoulement (215-1, 215-2) déplaçables linéairement le long d'une direction de refoulement (216) pour supporter les supports en acier de refoulement (212-1, 212-2).

11. Machine de soudage de chaînes selon la revendication 10, **caractérisée en ce que** le système de refoulement (250) présente deux axes linéaires servo-hydrauliques autarciques pour l'entraînement de refoulement direct des chariots de refoulement (215-1, 215-2).

12. Machine de soudage de chaînes selon l'une quelconque des revendications 6 à 11, **caractérisée en ce qu'**entre un entraînement à servocommande (220-1) du système de refoulement (250) et un chariot de refoulement (215-1) associé est disposé un capteur de force (230-1).

13. Machine de soudage de chaînes selon l'une quelconque des revendications précédentes, **caractérisée en ce que** l'arbre de commande est un arbre de commande mécanique supporté dans le bâti de machine (110) pour la commande temporisée de fonctions cinématiques de la machine de soudage de chaînes par le biais de disques de came.
